# EUROPÄISCHE PATENTSCHRIFT

(11) **EP 2 881 019 B1**
(45) Veröffentlichungstag und Bekanntmachung des Hinweises auf die Patenterteilung: **02.11.2016**
(21) Anmeldenummer: 14193015.6
(22) Anmeldetag: 13.11.2014
(51) Int. Cl.: A47J 31/54, H05B 6/80

(54) **Durchlauferhitzer, Milchaufschäumer mit Durchlauferhitzer oder Kaffeemaschinen mit Durchlauferhitzer**
Continuous flow heater, milk foamer with a continuous flow heater or coffee machines with a continuous flow heater
Chauffe-eau instantané, mousseur à lait doté d'un chauffe-eau instantané ou machine à café équipée d'un chauffe-eau instantané

(30) Priorität: 03.12.2013 DE 102013224747
(43) Veröffentlichungstag der Anmeldung: 10.06.2015
(73) Patentinhaber: WMF Group GmbH, 73312 Geislingen/Steige (DE)
(72) Erfinder: Göltenboth, Frank, 89134 Blaustein (DE); Dollner, Sander, 89233 Neu-Ulm (DE); Gussmann, Jochen, 73527 Schwäbisch-Gmünd (DE); Kuchler, Thobias, 89077 Ulm (DE)
(74) Vertreter: Pfenning, Meinig & Partner mbB

(56) Entgegenhaltungen:
- WO-A1-97/05756
- US-A- 4 967 052
- US-A- 5 360 964
- US-A1- 2004 149 742

## Beschreibung

Die vorliegende Erfindung bezieht sich auf einen Durchlauferhitzer zum Anschluss an oder zur Integration in eine Kaffeemaschine und/oder einen Milchaufschäumer sowie auf einen entsprechenden Milchaufschäumer und eine entsprechende Kaffeemaschine. Erfindungsgemäß handelt es sich um einen das strömende Fluid durch Strahlungswirkung erhitzenden Durchlauferhitzer, der nur im Bedarfsfall Wärme abgibt, um z.B. Milch, Milchschaum, Wasser oder Kaffee (oder auch Mischgetränke der vorgenannten Medien) zu erwärmen.

Die US 5,360,964 beschreibt eine Kaffeemaschine, die einen Mikrowellenerzeuger beinhaltet. Mit dem Mikrowellenerzeuger lässt sich über eine Antenne ein Leitungsmaterial erhitzen. Dadurch wird Wasser erhitzt.

Moderne Kaffeemaschinen, die auch Milch oder Milchschaum (oder Kaffee-Milch-Mischgetränke) ausgeben, können auch kalte Milch oder kalten Milchschaum ausgeben. Um Milch oder Milchschaum alternativ kalt oder erwärmt auszugeben, werden aufwendige Systeme eingesetzt. Beispielsweise existieren Vorrichtungen zur Umgehung des Erhitzers (EP 2 120 656 A, EP 2 583 596 A) oder auch komplett getrennte (doppelte) Pfade zum Erzeugen und zur Ausgabe von kalten oder von warmen Produkten (EP 2 294 952 A). Zudem beschreibt die DE 10 2009 010 989 A1 das Folgende: Bei einem Verfahren zur Dampferzeugung mit einem länglichen Heizelement, das als Strahlungsheizelement arbeitet, wird Wasser, das in einer das Heizelement schraubenartig umgebenden Wasserführung fließt, erhitzt und verdampft. Es wird der Dampf in der Wasserführung überhitzt auf eine Temperatur über 100°C und überhitzt auf eine Temperatur über 200°C. Das Strahlungsheizelement kann eine Halogenlampe in Stabform sein.

Nachteile solcher Systeme sind die hohe Anzahl an Komponenten und die damit verbundenen hohen Kosten sowie eine hohe Ausfallwahrscheinlichkeit der Komponenten und Schnittstellen und schließlich ein hoher Steuer- und Regelungsaufwand. Ein weiterer Nachteil der eingesetzten Erwärmungssysteme ist, dass die Erwärmung meist über eine Kontaktfläche eines Rohres bewirkt wird, das eine verhältnismäßig große Masse hat und somit sehr viel Restwärme speichert oder auch dauerbeheizt ist, was Anhaftungen an der Rohrwand begünstigt und schnell zur Verschmutzung bis hin zum Systemausfall führt. Zudem steigen durch die Dauerbeheizung oder die Durchwärmung der großen Massen der Energiebedarf und die Trägheit der Systeme. (Daneben werden auch Systeme mit Dampfzugabe in die Milch oder den Milchschaum eingesetzt; diese haben jeden den Nachteil, dass die Qualität der Milch und der Schaumprodukte nicht an jene der erstgenannten Systeme heranreicht.)

Zudem ist aus dem Stand der Technik (EP 1 343 356 B1) eine Mikrowelle bekannt, die in einen separaten Einschub für den mikrowellenbestrahlten Hohlraum für eine Kaffeekanne samt Filteraufsatz vorsieht.

Aufgabe der vorliegenden Erfindung ist es, einen Durchlauferhitzer, einen Milchaufschäumer und eine Kaffeemaschine zur Verfügung zu stellen, die zur Ausgabe wahlweise von kaltem oder erwärmtem Medium (bevorzugt: Milch und/oder Milchschaum) befähigt sind. Aufgabe ist es darüber hinaus, dies auf eine energieeffiziente und einfache Art und Weise zu ermöglichen.

Diese Aufgaben werden durch einen Durchlauferhitzer gemäß Anspruch 1, durch einen elektrisch betriebenen Milchaufschäumer gemäß Anspruch 8 und durch eine elektrisch betriebene Kaffeemaschine gemäß Anspruch 9 gelöst.

Nachfolgend wird die vorliegende Erfindung zunächst allgemein, dann anhand mehrerer Ausführungsbeispiele beschrieben. Die in den einzelnen Ausführungsbeispielen in Kombination miteinander verwirklichten Bauelemente eines erfindungsgemäßen Durchlauferhitzers müssen dabei nicht in der in den einzelnen Beispielen gezeigten Kombinationen verwirklicht sein, sondern können auch in anderen Kombinationen realisiert werden. Insbesondere können einzelne der in den gezeigten Ausführungsbeispielen verwendeten Bauelemente auch weggelassen werden oder auf andere Art und Weise mit den Bauelementen desselben Ausführungsbeispiels (oder auch der anderen Ausführungsbeispiele) kombiniert werden. Bereits einzelne der gezeigten Merkmale können für sich eine Verbesserung des Standes der Technik darstellen.

Die grundlegende Idee der vorliegenden Erfindung besteht darin zur Ausgabe von wahlweise kaltem oder erwärmtem Medium (bevorzugt: Milch oder Milchschaum) einen Durchlauferhitzer mit direktem Energieeintrag in das Medium zu realisieren.

Das kann insbesondere dadurch geschehen, dass eine Durchlaufanordnung ausgebildet wird, bei der das Medium durch eine Erwärmungseinheit (nachfolgend allgemein als Leitung bezeichnet) geleitet wird, die zusammen mit einer Heizvorrichtung, die das Medium erhitzende elektromagnetische Strahlung emittiert, in der Lage ist, das Medium (mit wenig Energieverlust an der Leitung selbst) direkt, also durch Absorption besagter Strahlung im Medium, zu erwärmen. Geeignet für diese Art der Erwärmung sind beispielsweise Strahlenspektren in Form von Mikrowellenstrahlung oder auch Infrarotstrahlung.

So kann das zu erwärmende Medium durch eine mikrowellentransparente Leitung (beispielsweise Rohrleitung aus Glas) geleitet und mit den emittierten Mikrowellen der Heizvorrichtung bestrahlt werden. Die Leitung wird so gewählt, dass ihre Wandung aus einem Material mit hohem Transmissionsgrad bei den verwendeten Wellenlängen des Emissionsspektrums ausgebildet ist (beispielsweise: Quarzglas, Borosilikatglas oder auch für Mikrowellenstrahlung oder Infrarotstrahlung hochtransparente Kunststoffe). Die Oberflächen der medienberührten Seite(n) der Leitung (beispielsweise: des Rohres) können mit Antihaftbeschichtungen ausgestattet sein, welche das Anhaften von Fluidbestandteilen (insbesondere: Milchbestandteilen) minimieren. Die Leitung kann eine Ausprägungsrichtung (also eine Fließrichtung) haben oder auch eine Mehrzahl von Ausprägungsrichtungen haben, indem beispielsweise Umkehrungen der Fließrichtung vorgesehen sind (die Leitung kann somit z.B. als zylinderförmiges Rohr, als Wendel, als Ansammlung mehrerer verbundener Rohre usw. ausgebildet sein).

Ein erfindungsgemäßer Durchlauferhitzer ist im Anspruch 1 beschrieben.

Der Begriff der Leitung ist dabei sehr allgemein zu verstehen und legt die geometrische Form nicht fest: So lassen sich zylinderförmige Rohrleitungen ebenso einsetzen wie Verzweigungen solcher Rohrleitungen, Rohrleitungen mit integrierten Sammelkammern für das Fluid oder auch nahezu beliebige andere geometrische Formen. Unter dem Begriff des Fluids ist erfindungsgemäß bevorzugt ein Fluid zu verstehen, das näherungsweise (oder exakt) die chemischen und physikalischen Eigenschaften (beispielsweise: Dichte, spezifische Wärmekapazität, ...) von Wasser aufweist. Insbesondere kann als Fluid Milch, Milchschaum, eine Mischung aus Milch und Milchschaum, Wasser oder auch bereits aufgebrühter Kaffee eingesetzt werden. Insbesondere kann der Durchlauferhitzer auch dazu eingesetzt werden, wahlweise kaltgebrühten Kaffee oder warmgebrühten Kaffee auszugeben, also z.B. die komplexe Leitungsführung stromaufwärts der Durchströmeinheit (vgl. die Bezugszeichen 5a bis 5c, 6 und 7a bis 7c in Figur 1) der DE 10 2011 102 733 A1 ersetzen.

Dabei befinden sich vorteilhafterweise keinerlei Bauelemente, Festkörper oder Fluide zwischen der Wandung des z.B. in Form einer Helix oder Wendel ausgeformten Abschnitts der Leitung einerseits und der Außenwand der Strahlungsquelle andererseits, so dass in einem eventuell zwischen letzterer Außenwand und der Wandung des Abschnitts der Leitung keine Absorption (oder nur eine minimale Absorption) der von der Strahlungsquelle abgegebenen Strahlungsintensität erfolgt.

Erste vorteilhafterweise realisierte Merkmale beschreibt der abhängige Anspruch 2.

Weitere vorteilhafterweise realisierte Merkmale sind wie folgt: Die Wandung der Leitung, insbesondere deren Wandungsmaterialart, deren Wandungsmaterialdichte und deren Wandungsdicke, das Spektrum der von der Heizvorrichtung abgestrahlten elektromagnetischen Strahlung und die Position der Leitung und der Heizvorrichtung sind relativ zueinander so aufeinander abgestimmt, dass mindestens 50%, bevorzugt mindestens 90%, bevorzugt mindestens 95%, besonders bevorzugt mindestens 99% der Intensität der abgestrahlten und auf der äußeren Oberfläche der Wandung auftreffenden Strahlung durch die Wandung hindurch ins Innenvolumen der Leitung transmittiert wird.

Die Wandung hat somit physikalische Eigenschaften (ihres Materials, ihrer Dichte, ihrer Dicke usw.) die so auf die Heizvorrichtung bzw. eine Strahlungsquelle derselben abgestimmt sind, dass das abgestrahlte elektromagnetische Spektrum möglichst wenig in der Wandung der Leitung absorbiert wird und möglichst vollständig in dem innerhalb der Leitung fließenden Fluid absorbiert wird. Dazu kann das abgestrahlte elektromagnetische Spektrum (also die Strahlungsquelle) auch an den Typ des strömenden Fluids angepasst werden. Zum Erhitzen von Milch oder Milchschaum (aber auch für Wasser oder aufgebrühten Kaffee) eignet sich insbesondere Infrarotstrahlung oder Mikrowellenstrahlung.

Demgemäß lassen sich weitere vorteilhafterweise realisierte Merkmale dem Anspruch 3 entnehmen.

Weitere vorteilhafterweise realisierte Merkmale (wobei alle in den abhängigen Ansprüchen realisierten Merkmale in beliebiger Kombination mit Merkmalen anderer abhängigen Ansprüche realisiert sein können), lassen sich dem Anspruch 4 entnehmen.

Besonders vorteilhaft ist ein Durchlauferhitzer, der zumindest die Merkmale der Ansprüche 3 bis 4 realisiert, da mit ihm nach dem Einschalten der Strahlungsquelle auf einfache und effiziente Art und Weise (die abgestrahlte Intensität wird in hohem Maße zur Erhitzung des zu erhitzenden Fluids verwendet) ein Erhitzen des Fluids ermöglicht ist.

Weitere vorteilhafterweise realisierte Merkmale lassen sich Anspruch 5 entnehmen.

Somit kann gemäß Anspruch 5 die Heizvorrichtung im Bedarfsfall zuschaltbar (wenn die momentan durch die Leitung strömende Fluidmenge erhitzt werden soll) und wieder abschaltbar sein (wenn die momentan durch die Leitung strömende Fluidmenge nicht erhitzt, also in ihrem gegebenen Temperaturzustand beibehalten werden soll). Dies geschieht über das Anschalten und Abschalten der Strahlungsquelle. Die Ausgestaltung erfolgt bevorzugt so, dass die medienführende Leitung unmittelbar nach Abschalten der Energiezufuhr der Heizvorrichtung wieder abkühlt, so dass in ein und derselben Leitung unmittelbar im Anschluss an die Abgabe einer erwärmten Fluidmenge die Abgabe einer nicht erwärmten Fluidmenge (Kaltdosierung) ermöglicht ist.

Die beheizbare Leitung kann erfindungsgemäß ein spezifisch zum Erwärmen ausgebildeter Abschnitt einer längeren Leitung (deren andere Abschnitte somit nicht selektiv beheizbar sind) sein.

Die Heizvorrichtung kann mechanisch an die Leitung ankoppelbar und wieder von der Leitung abkoppelbar sein, insbesondere zur Leitung hin und wieder von der Leitung weg bewegbar sein oder umgekehrt. Das Ankoppeln kann dadurch erfolgen, dass die Heizvorrichtung an die Leitung gekoppelt wird (insbesondere: zur Leitung hinbewegt wird) oder auch umgekehrt (d.h. die Leitung wird an die Heizvorrichtung gekoppelt, insbesondere also zur Heizvorrichtung hinbewegt). Entsprechend erfolgt dann das Abkoppeln. Dabei bedeutet "oder umgekehrt", dass das Fluid zunächst in Hinrichtung durch das Außenrohr strömt und anschließend über die überleitende Umkehrung in das Innenrohr strömt (und dort in Gegenrichtung aus der Leitung abgeleitet wird). Das Außenrohr und das Innenrohr stellen somit zwei koaxiale Rohre dar, wobei das Innenrohr innerhalb des Außenrohrs geführt ist. Eine solche Ankoppelbarkeit und Abkoppelbarkeit der Heizvorrichtung von der Leitung macht beispielsweise dann Sinn, wenn die Heizvorrichtung oder die Strahlungsquelle derselben eine bestimmte Zeit braucht, um vorgeheizt zu werden bzw. ihre maximale Abstrahlung zu erreichen: Vorzugsweise erfolgt in diesem Fall erst dann ein Ankoppeln der Heizvorrichtung an die Leitung, wenn die maximale Strahlungsstärke bzw. Abstrahlintensität der Strahlungsquelle erreicht ist. Auch wenn die Heizvorrichtung bzw. deren Strahlungsquelle ihre Abstrahlung nicht sofort nach Abschalten der Energiezufuhr einstellt, ist eine solche An- und Abkoppelbarkeit sinnvoll: In diesem Fall kann die Heizvorrichtung nach dem Abschalten der Energiezufuhr von der Leitung abgekoppelt werden, so dass ein unerwünschtes Nachheizen des Fluids in der Leitung bei bereits abgeschalteter Energieversorgung der Strahlungsquelle vermieden wird.

Weitere vorteilhafterweise realisierte Merkmale beschreibt Anspruch 6.

Gemäß Anspruch 6 sind bevorzugt alle vier der genannten Merkmale realisiert, wobei bevorzugt nicht nur Abschnitte der Leitung, sondern die gesamte Leitung (bzw. deren Wandung) aus einem entsprechenden Material, mit entsprechender Wanddicke und mit entsprechender Wärmekapazität ausgebildet ist. Zumindest ist es jedoch vorteilhaft, das erste der in Anspruch 6 beanspruchten Merkmale zu verwirklichen. Für Infrarotstrahlung eignet sich insbesondere Quarzglas, Borosilikatglas oder Polymethylmethacrylat als Leitungsmaterial. Für Mikrowellenstrahlung eignet sich insbesondere Quarzglas, Borosilikatglas, Homopolypropylen, Polybutylenterephthalat, Polysulfon, Polyethersulfon oder Polytetrafluorethylen als Leitungsmaterial. Das Wandmaterial ist dabei bevorzugt so zu wählen, dass die Durchlässigkeit des Rohrmaterials für IR- oder Mikrowellenstrahlung möglichst hoch ist, um möglichst viel Energie verlustfrei direkt in die Milch zu bekommen.

Ein erfindungsgemäßer Milchaufschäumer ist in Anspruch 7 beschrieben, eine erfindungsgemäße Kaffeemaschine in Anspruch 8.

Dabei muss der erfindungsgemäße Durchlauferhitzer jedoch nicht in dem Milchaufschäumer oder der Kaffeemaschine integriert sein, sondern kann auch (beispielweise in einem separaten Gehäuse) als separates, elektrisch betriebenes Gerät ausgebildet sein, das an einen Milchaufschäumer oder an eine Kaffeemaschine angeschlossen werden kann. Der Anschluss kann so erfolgen, dass die Stromversorgung des erfindungsgemäßen Durchlauferhitzers vom angeschlossenen Milchaufschäumer oder von der angeschlossenen Kaffeemaschine übernommen wird.

Gegenüber den aus dem Stand der Technik bekannten Vorrichtungen haben die erfindungsgemäßen Vorrichtungen insbesondere die folgenden Vorteile:
- Es wird nur das Fluid (Milch und/oder Milchschaum) beheizt, das auch unmittelbar ausgegeben wird. Die Gefahr von Keimbildung durch ein dauerbeheiztes Fluid wird somit minimiert.
- Dadurch ist ein geringer Spülmitteleinsatz gegeben, so dass die erfindungsgemäßen Vorrichtungen ökonomischer und ökologischer als bestehende Systeme betrieben werden können.
- Der Energieeinsatz ist bei den erfindungsgemäßen Vorrichtungen reduziert, da nur um Bedarfsfall Energie zur Verfügung gestellt werden muss.
- Die erfindungsgemäßen Vorrichtungen lassen sich einfacher und hygienischer betreiben, da weniger Schnittstellen notwendig sind und da weniger Umschaltmechanismen eingebaut werden müssen. Hierdurch ergibt sich auch eine erhöhte Wartungsfreundlichkeit.
- Insbesondere ist ein einfacher und robuster Aufbau der erfindungsgemäßen Vorrichtungen möglich.
- Geringe Gefahr von Anhaftungen an der Innenwand der Leitung.

Nachfolgend wird die vorliegende Erfindung anhand von Ausführungsbeispielen beschrieben.

Dabei zeigen:
Figur 1 einen ersten erfindungsgemäßen Durchlauferhitzer zum Heizen des Fluids mittels einer Heizvorrichtung mit Infrarot-Strahlungsquelle.
Figur 2 ein Beispiel für einen erfindungsgemäßen, elektrisch betriebenen Kaffeevollautomaten, in dem ein Durchlauferhitzer wie er in dem Ausführungsbeispiel gemäß Figur 1 beschrieben ist, integriert ist.

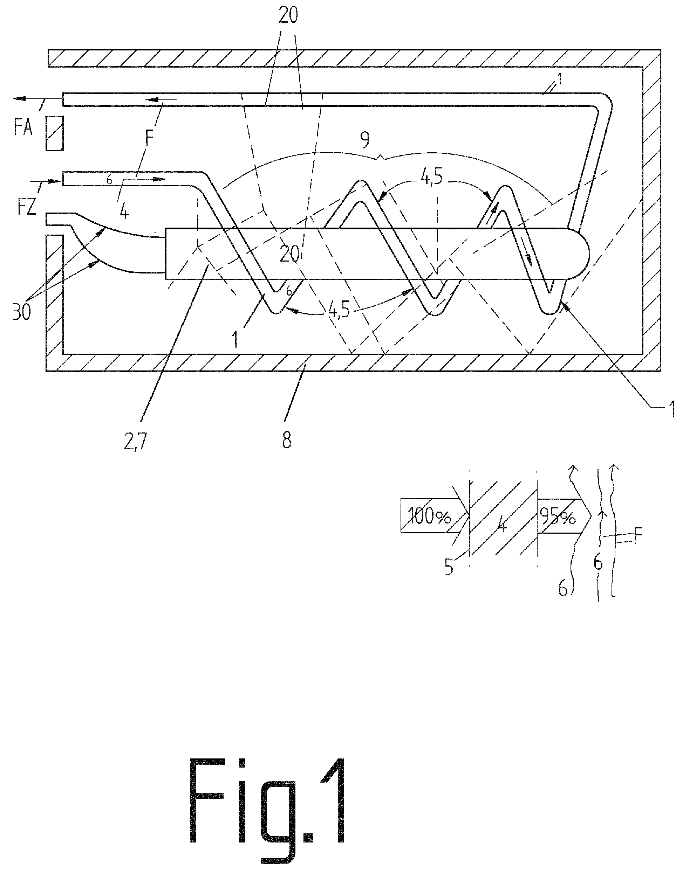

Figur 1 zeigt einen erfindungsgemäßen Durchlauferhitzer. Dieser umfasst eine mit einem Fluid F (hier: Milch) durchströmbare, im Querschnitt runde Leitung 1, die einen Innendurchmesser von 3 bis 5 mm sowie eine beheizbare Leitungslänge von 20 bis 100 cm, bevorzugt von 50 cm, aufweist. Die Milch F wird der Leitung 1 an ihrem einen Ende zugeführt, wobei diese Fluidzufuhr (z.B. aus einer Ansaugleitung einer Kaffeemaschine, in der eine Förderpumpe sitzt) mit dem Bezugszeichen FZ bezeichnet ist. Am stromabwärtigen Leitungs- bzw. Rohrende der Leitung 1 erfolgt die Ableitung der (bei eingeschalteter Heizvorrichtung 2) erhitzten Milch, wobei diese Fluidableitung mit dem Bezugszeichen FA bezeichnet ist.

In Strömungsrichtung des Fluids F im Innenvolumen 6 der Leitung 1 gesehen folgt nach einem ersten, zylinderförmigen Leitungsabschnitt im Bereich der Fluidzufuhr FZ ein wendel- oder helixförmiger Abschnitt 9 mit hier drei Windungen, wobei dieser Abschnitt 9 so entlang der Längsachse um eine längliche, im wesentlichen zylinderförmige Strahlungsquelle (hier: Halogenlampe) gewunden ist, dass die im Inneren 6 des Abschnitts 9 strömende Fluidmenge F mittels der von der Halogenlampe 7 der Heizvorrichtung 2 abgestrahlten, die Wandung 4 des Abschnitts 9 durchdringenden Infrarotstrahlung 20 erhitzbar ist. Das von der Halogenlampe 7 abgestrahlte Infrarotspektrum, die Wandung 4 und die relative Position des Abschnitts 9 einerseits sowie der länglichen, zylinderförmigen Infrarotstrahlungsquelle 7 andererseits (der Abstand der Windungen des Abschnitts 9 von der Außenhülle der Strahlungsquelle 7 beträgt maximal 5 bis 10 mm) sind so gewählt, dass mindestens 90%, bevorzugt mindestens 95% der auf der äußeren Oberfläche 5 der Wandung 4 des Abschnitts 9 der Leitung 1 auftreffenden Intensität der von der Quelle 7 abgegebenen Strahlung durch die Wandung 4 hindurch ins Innenvolumen 6 der Leitung transmittiert wird (vgl. Figur 1 rechts unten) und größtenteils im Innenvolumen 6 in der Flüssigkeit F zum Erwärmen derselben absorbiert wird.

Stromabwärts des Abschnitts 9 schließt sich ein weiterer im wesentlichen zylinderförmiger Abschnitt der Leitung 1 an, mit dem die nunmehr erhitzte Flüssigkeit F entgegen der Flussrichtung durch den Abschnitt 9 aus dem Durchlauferhitzer abgeleitet wird (Fluidabfuhr FA).

Um von der Strahlungsquelle abgegebene Infrarotstrahlung, die nicht auf einen äußeren Oberflächenabschnitt 5 der Wandung 4 der Leitung 1 trifft, oder durch die Leitung 1 samt Medium hindurch transmittierte Reststrahlung nicht ungenutzt in den den Durchlauferhitzer umgebenden Raum abzustrahlen, sind die Leitung 1 sowie die von deren Abschnitt 9 umhüllte Strahlungsquelle 7 von einem auf seiner inneren Oberfläche goldbeschichteten Glasreflektor 8 umhüllt. Das Gehäuse des Reflektors 8 ist im wesentlichen ebenfalls zylinderförmig und umschließt die Elemente 1, 9 und 7 vollständig (bis auf die Leitungsdurchführungen im Bereich FZ und FA und die Durchführungen für die elektrischen Zu- und Ableitungen 30 zum Betrieb der Heizvorrichtung 2 bzw. der Strahlungsquelle 7 derselben).

Figur 1 zeigt somit einen erfindungsgemäßen Durchlauferhitzer, bei dem um eine Strahlungsquelle in Form einer Halogenlampe 7 eine Rohrleitung 1, 9 angebracht ist (die auch andere Ausprägungen als die gezeigte wendelförmige aufweisen kann). Um diese Anordnung aus Strahlungsquelle 7 und Rohrleitung 1, 9 ist ein Reflektor 8 angebracht, um Strahlungsverluste zu minimieren.

Die gezeigte Konfiguration erlaubt ein Erhitzen einer Flüssigkeitsmenge F von 150 ml von 20°C auf 60°C bis 70° nach dem Anschalten der Strahlungsquelle 7 in etwa 15 Sekunden, wobei die Strömungsgeschwindigkeit des Fluids F in der Leitung 1, 9 etwa 10 Gramm/Sekunde beträgt. Die Eigenschaften der Leitung 1, 9 bzw. deren Wandung 4 stellen sicher, dass unmittelbar nach dem Abschalten der Strahlungsquelle 7 (also dem Beenden des unmittelbaren Erhitzens der Flüssigkeit F im Rohr 1 durch die absorbierte Wärmestrahlung) durch die praktisch fehlende Wärmepufferung im Rohr 1 keine Wärme mehr an im Rohr 1, 9 strömendes Fluid F mehr abgegeben wird.

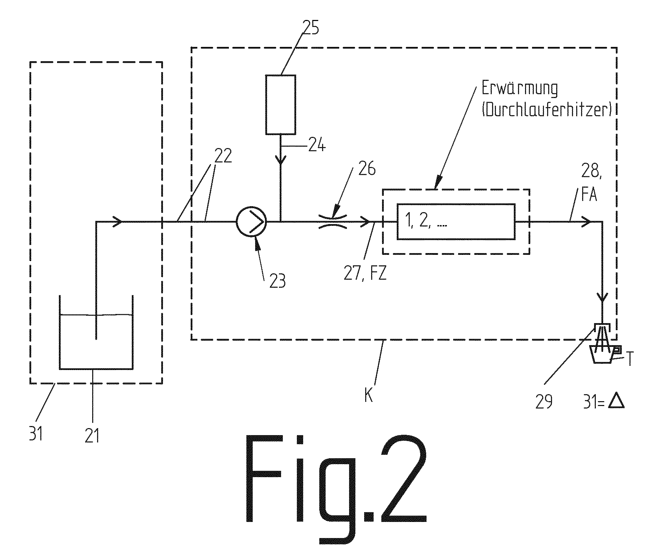

Figur 2 zeigt ein Beispiel für einen erfindungsgemäßen, elektrisch betriebenen Kaffeevollautomaten, in den ein Durchlauferhitzer, wie er in den Ausführungsbeispielen der Figuren 1 bis 2 beschrieben ist, integriert ist. Aus einem Kühler 31 mit einem Milchvorrat 21 kann Milch vermittels einer Pumpe 23 der Kaffeemaschine K über eine Leitung 22 zugeführt werden. Stromabwärts der Pumpe 23 mündet zunächst eine Druckluftzufuhrleitung 24, die Druckluft aus einer Druckluftquelle 25 zuführt, in die Leitung 22. Stromabwärts der Einmündung der Druckluftleitung 24 ist in der Leitung 22 eine Engstelle in Form einer Blende 26 ausgebildet. An dieser Engstelle erfolgt ein Verwirbeln der von der Druckluftquelle 25 zugeführten Druckluft mit der über die Pumpe 23 zugeführten Milch, so dass nach einem dem Fachmann an sich bekannten Prinzip Milchschaum hergestellt wird, der über die Leitung 22 bzw. den Anschluss 27 dieser Leitung an die durchströmbare Leitung 1 des Durchlauferhitzers letzterem zugeführt wird (Fluidzufuhr FZ in den Durchlauferhitzer). Die Milchschaumableitung (Fluidableitung FA) aus der beheizbaren Leitung 1 erfolgt über die ausgangsseitig an die Leitung 1 angeschlossene Ablaufleitung 28, die über die Ausgabestelle 29 den wahlweisen erhitzten oder nicht-erhitzten Milchschaum an ein externes Gefäß in Form einer Tasse T abgibt.

Die Steuerung der Pumpe 23, der Druckluftquelle 25 sowie des erfindungsgemäßen Durchlauferhitzers erfolgt mit der Steuer- und Regeleinheit der Kaffeemaschine K, die hier nicht gezeigt ist.

## Patentansprüche

1. Durchlauferhitzer zum Anschluss an oder zur Integration in eine Kaffeemaschine (K) und/oder einen Milchaufschäumer mit
einer mit einem Fluid durchströmbaren Leitung (1), und
einer zum Beheizen einer sich beim Durchströmen der Leitung (1) in dieser befindenden Fluidmenge (F) ausgebildeten Heizvorrichtung (2),
***dadurch gekennzeichnet, dass***
mit der Heizvorrichtung (2) eine elektromagnetische Strahlung (20) abstrahlbar ist, die eine Wandung (4) der Leitung (1) zu durchdringen vermag,
dass die Heizvorrichtung (2) und die Leitung (1) so positioniert sind, dass die sich beim Durchströmen der Leitung (1) in letzterer befindende Fluidmenge (F) mittels der von der Heizvorrichtung (2) abgestrahlten, die Wandung (4) durchdringenden elektromagnetischen Strahlung (20) erhitzbar ist, und
dass die Leitung (1) einen um eine Strahlungsquelle (7) der Heizvorrichtung (2) herum gewundenen Abschnitt (9) so aufweist, dass die in diesem Abschnitt (9) der Leitung (1) strömende Fluidmenge (F) mittels der von der Strahlungsquelle (7) der Heizvorrichtung (2) abgestrahlten, die Wandung (4) dieses Abschnitts (9) durchdringenden elektromagnetischen Strahlung (20) erhitzbar ist.

2. Durchlauferhitzer nach dem vorhergehenden Anspruch,
***dadurch gekennzeichnet, dass***
der Abschnitt (9) helixförmig um die Strahlungsquelle (7) der Heizvorrichtung (2) herum gewunden ist.

3. Durchlauferhitzer nach einem der vorhergehenden Ansprüche,
***dadurch gekennzeichnet, dass***
die Heizvorrichtung (2) als Strahlungsquelle (7) eine Mikrowellen emittierende, also elektromagnetische Wellen mit Wellenlängen im Bereich zwischen 1 mm und 1 m emittierende, Strahlungsquelle, insbesondere ein Magnetron, umfasst,
oder
dass die Heizvorrichtung (2) als Strahlungsquelle (7) eine im Infraroten emittierende, also elektromagnetische Wellen mit Wellenlängen im Bereich zwischen 780 nm und 1 mm emittierende, Strahlungsquelle, insbesondere einen Infrarotstrahler oder einen Halogenstrahler, umfasst.

4. Durchlauferhitzer nach einem der vorhergehenden Ansprüche,
***dadurch gekennzeichnet, dass***
die Heizvorrichtung (2) und/oder die Strahlungsquelle (7) derselben sowie die Leitung (1) von einem die abgestrahlte elektromagnetische Strahlung (20) reflektierenden Reflektor (8), insbesondere von einem Reflektor aus Ag-, AI- oder Au-beschichtetem Glas, umgeben sind.

5. Durchlauferhitzer nach einem der vorhergehenden Ansprüche,
***dadurch gekennzeichnet, dass***
die Heizvorrichtung (2) zum Starten des Beheizens anschaltbar und zum Beenden des Beheizens wieder abschaltbar ist.

6. Durchlauferhitzer nach einem der vorhergehenden Ansprüche,
***dadurch gekennzeichnet, dass***
die Leitung (1) Glas, insbesondere Quarzglas oder Borosilikatglas, und/oder einen Kunststoff, insbesondere Polymethylmethacrylat, Homopolypropylen, Polybutylenterephthalat, Polysulfon, Polyethersulfon oder Polytetrafluorethylen enthält oder daraus besteht
und/oder
dass die Leitung (1) ein Material mit einer spezifischen Wärmekapazität von ≤ 1000 J·kg⁻¹·K⁻¹, bevorzugt von ≤ 500 J·kg⁻¹·K⁻¹, enthält oder daraus besteht
und/oder
dass die Wanddicke der Wandung (4) der Leitung (1) zwischen 0.5 mm und 3 mm, bevorzugt zwischen 1 mm und 2 mm, bevorzugt bei 1.5 mm liegt.

7. Elektrisch betriebener Milchaufschäumer,
***dadurch gekennzeichnet, dass***
ein zum Erhitzen von Milch als Fluid ausgebildeter Durchlauferhitzer nach einem der vorhergehenden Ansprüche in den Milchaufschäumer integriert ist.

8. Elektrisch betriebene Kaffeemaschine (K), insbesondere Kaffeevollautomat,
***dadurch gekennzeichnet, dass***
ein zum Erhitzen von Milch als Fluid ausgebildeter Durchlauferhitzer oder Milchaufschäumer nach einem der vorhergehenden Ansprüche in die Kaffeemaschine (K) integriert ist.

## Claims

1. A continuous-flow heater for connection to or integration in a coffee machine (K) and/or a milk foamer, with
a line (1) through which a fluid can flow, and
a heating device (2) designed for heating a quantity of fluid (F) located in the line (1) upon flowing through it,
**characterised in that**
electromagnetic radiation (20) which is capable of penetrating a wall (4) of the line (1) can be emitted with the heating device (2),
**in that** the heating device (2) and the line (1) are positioned such that the quantity of fluid (F) located in the line (1) upon flowing therethrough can be heated by means of the electromagnetic radiation (20) which is emitted by the heating device (2) and penetrates the wall (4), and
**in that** the line (1) has a portion (9) wound around a radiation source (7) of the heating device (2) such that the quantity of fluid (F) flowing in this portion (9) of the line (1) can be heated by means of the electromagnetic radiation (20) which is emitted by the radiation source (7) of the heating device (2) and penetrates the wall (4) of this portion (9).

2. A continuous-flow heater according to the preceding claim,
**characterised in that**
the portion (9) is wound helically around the radiation source (7) of the heating device (2).

3. A continuous-flow heater according to one of the preceding claims,
**characterised in that**
the heating device (2) comprises as radiation source (7) a radiation source which emits microwaves, i.e. emits electromagnetic waves with wavelengths in the range between 1 mm and 1 m, in particular a magnetron,
or
**in that** the heating device (2) comprises as radiation source (7) a radiation source which emits in the infrared, i.e. emits electromagnetic waves with wavelengths in the range between 780 nm and 1 mm, in particular an infrared emitter or a halogen emitter.

4. A continuous-flow heater according to one of the preceding claims,
**characterised in that**
the heating device (2) and/or the radiation source (7) thereof and also the line (1) is/are surrounded by a reflector (8) which reflects the emitted electromagnetic radiation (20), in particular by a reflector made of Ag-coated, Al-coated or Au-coated glass.

5. A continuous-flow heater according to one of the preceding claims,
**characterised in that**
the heating device (2) can be switched on to start the heating and can be switched off again to terminate the heating.

6. A continuous-flow heater according to one of the preceding claims,
**characterised in that**
the line (1) contains or consists of glass, in particular quartz glass or borosilicate glass, and/or a plastics material, in particular polymethyl methacrylate, homopolypropylene, polybutylene terephthalate, polysulphone, polyether sulphone or polytetrafluoroethylene
and/or
**in that** the line (1) contains or consists of a material having a specific heat capacity of
≤ 1000 J·kg⁻¹·K⁻¹, preferably of ≤ 500 J·kg⁻¹·K⁻¹,
and/or
**in that** the wall thickness of the wall (4) of the line (1) lies between 0.5 mm and 3 mm, preferably between 1 mm and 2 mm, preferably at 1.5 mm.

7. An electrically-operated milk foamer,
**characterised in that**
a continuous-flow heater, designed for heating milk as fluid, according to one of the preceding claims is integrated in the milk foamer.

8. An electrically-operated coffee machine (K), in particular fully automatic coffee maker,
**characterised in that**
a continuous-flow heater or milk foamer, designed for heating milk as fluid, according to one of the preceding claims is integrated in the coffee machine (K).

## Revendications

1. Chauffe-eau instantané pour raccordement à une machine à café (K) et/ou un émulsionneur à lait, ou pour intégration dans ceux-ci, comprenant
une conduite (1) par laquelle peut passer un fluide, et
un dispositif de chauffage (2) configuré pour chauffer une quantité de fluide (F) qui quand elle passe par la conduite (1) se trouve à l'intérieur de celle-ci,
**caractérisé en ce que**
à l'aide du dispositif de chauffage (2), un rayonnement électromagnétique (20) peut être émis, qui est à même de traverser une paroi (4) de la conduite (1),
que le dispositif de chauffage (2) et la conduite (1) sont positionnés de telle sorte que la quantité de fluide (F) qui, quand elle passe par la conduite (1), se trouve à l'intérieur de celle-ci, puisse être chauffée à l'aide du rayonnement électromagnétique (20) émis par le dispositif de chauffage (2) et traversant la paroi (4), et
que la conduite (1) comprend un tronçon (9) enroulé autour d'une source de rayonnement (7) du dispositif de chauffage (2), de telle sorte que la quantité de fluide (F) s'écoulant dans ce tronçon (9) de la conduite (1) puisse être chauffée à l'aide du rayonnement électromagnétique (20) émis par la source de rayonnement (7) du dispositif de chauffage (2) et traversant la paroi (4) de ce tronçon (9).

2. Chauffe-eau instantané selon la revendication précédente,
**caractérisé en ce que**
le tronçon (9) est enroulé en hélice autour de la source de rayonnement (7) du dispositif de chauffage (2).

3. Chauffe-eau instantané selon l'une des revendications précédentes,
**caractérisé en ce que**
le dispositif de chauffage (2) comprend en tant que source de rayonnement (7) une source de rayonnement, en particulier un magnétron, émettant des micro-ondes, c'est-à-dire émettant des ondes électromagnétiques ayant une longueur d'onde comprise dans la gamme de 1 mm à 1 m,
ou
que le dispositif de chauffage (2) comprend en tant que source de rayonnement (7) une source de rayonnement, en particulier un radiateur infrarouge ou un radiateur à halogène, émettant dans l'infrarouge, c'est-à-dire émettant des ondes électromagnétiques ayant une longueur d'onde comprise dans la gamme de 780 nm à 1 mm.

4. Chauffe-eau instantané selon l'une des revendications précédentes,
**caractérisé en ce que**
le dispositif de chauffage (2) et/ou la source de rayonnement (7) de ce dernier, ainsi que la conduite (1), sont entourés d'un réflecteur (8), qui réfléchit le rayonnement électromagnétique émis (20), en particulier par un réflecteur en verre revêtu d'Ag, d'Al ou d'Au.

5. Chauffe-eau instantané selon l'une des revendications précédentes,
**caractérisé en ce que**
le dispositif de chauffage (2) peut être allumé pour lancer le chauffage et peut être ré-éteint pour mettre fin au chauffage.

6. Chauffe-eau instantané selon l'une des revendications précédentes,
**caractérisé en ce que**
la conduite (1) contient du verre, en particulier un verre quartzeux ou un verre au borosilicate, et/ou un matériau plastique, en particulier un poly(méthacrylate de méthyle), un homopolypropylène, un poly(téréphtalate de butylène), une polysulfone, une polyéthersulfone ou un polytétrafluoréthylène, ou en est constituée,
et/ou
que la conduite (1) contient un matériau ayant une capacité de chaleur massique ≤ 1000 J.kg⁻¹.K⁻¹, en particulier ≤ 500 J.kg⁻¹.K⁻¹, ou en est constituée,
et/ou
que l'épaisseur de paroi (4) de la conduite (1) est comprise entre 0,5 mm et 3 mm, de préférence entre 1 mm et 2 mm, de préférence est de 1,5 mm.

7. Emulsionneur à lait à commande électrique,
**caractérisé en ce que**
un chauffe-eau instantané, configuré pour chauffer du lait en tant que fluide, selon l'une quelconque des revendications précédentes, est intégré dans l'émulsionneur à lait.

8. Machine à café à commande électrique (K), en particulier machine à café automatique,
**caractérisée en ce que**
un chauffe-eau instantané configuré pour chauffer du lait en tant que fluide, ou un émulsionneur à lait selon l'une des revendications précédentes, est intégré dans la machine à café (K).
